# EUROPÄISCHE PATENTSCHRIFT

(11) **EP 2 330 003 B1**
(45) Veröffentlichungstag und Bekanntmachung des Hinweises auf die Patenterteilung: **06.01.2016**
(21) Anmeldenummer: 10014718.0
(22) Anmeldetag: 18.11.2010
(51) Int. Cl.: B60T 7/04, B60T 17/22, G01L 5/22, G01L 5/28, G05G 1/54

(54) **Aktuatorvorrichtung mit Kraftsensor**
Actuator device with force sensor
Dispositif d'actionneur doté d'un capteur de force

(30) Priorität: 28.11.2009 DE 102009056209
(43) Veröffentlichungstag der Anmeldung: 08.06.2011
(73) Patentinhaber: Stähle, Kurt, 75242 Neuhausen-Steinegg (DE)
(72) Erfinder: Stähle, Kurt, 75242 Neuhausen-Steinegg (DE)
(74) Vertreter: Wacker, Jost Oliver

(56) Entgegenhaltungen:
- DE-A1- 4 314 731
- US-A- 3 977 241
- US-A- 5 483 825
- US-A1- 2004 255 688

## Beschreibung

Die Erfindung betrifft eine Aktuatorvorrichtung zur Betätigung wenigstens eines Fußpedals eines Kraftfahrzeuges nach dem Oberbegriff des Anspruchs 1. Diese Aktuatorvorrichtung weist wenigstens ein Betätigungselement zur Betätigung wenigstens eines Fußpedals eines Kraftfahrzeuges auf. Dabei kann das Betätigungselement zur Beaufschlagung des Fußpedals mittels eines Stellantriebes angetrieben werden. Ferner weist die Aktuatorvorrichtung einen Kraftsensor auf, mittels dem eine an einer Kontaktfläche des Betätigungselementes erzeugbare Beaufschlagungskraft ermittelt beziehungsweise abgeleitet werden kann.

Derartige Aktuatorvorrichtungen werden benötigt, um beispielsweise Funktions-und Dauertests der Fußpedale eines Kraftfahrzeuges, wie Gas-, Kupplungs- und Bremspedal, durchzuführen oder das Fahrzeug automatisiert beziehungsweise teilautomatisiert zu fahren. Hierbei führt die Aktuatorvorrichtung wiederkehrende Bewegungsabläufe zur Beaufschlagung der Fußpedate aus, die der tatsächlichen Betätigung der Fußpedale bei dem zu erwartenden Gebrauch des Fahrzeuges weitestgehend entsprechen.

Aus DE 24 15 095 A1 ist eine Betätigungsvorrichtung für ein Bremspedal bekannt, bei der ein Bremspedalkontaktkissen gegen das betreffende Pedal pressbar ist. Das Bremspedalkontaktkissen ist hierzu über ein Kugelgelenk an einer Kolbenstange einer Betätigungsvorrichtung gelagert. Um während des Betriebs eine tatsächlich auf das Bremspedal übertragene Kraft zu ermitteln, ist am Boden des Bremspedalkontaktkissens ein Bremskraftaufnehmer vorgesehen, der zusammen mit dem Bremspedalkontaktkissen gegen das betreffende Pedal gepresst wird. Ferner sind zwei Mikroschalter vorgesehen, mittels denen ein Kontakt des Bremspedalkontaktkissens mit dem Pedal sowie eine Endanschlagstellung des Pedals detektierbar ist.

DE 43 14 731 A1 beschreibt hierbei einen Kraftfahrzeug-Fahrroboter, der mehrere Betätigungsglieder für Fußpedale aufweist. Die Betätigungsglieder weisen hierzu jeweils einen verschiebbaren Gleitarm auf, der an seinem freien Ende einen Kontaktsensor zum Detektieren eines Kontaktes mit dem jeweiligen Pedal sowie einen Kraftsensor zum detektieren von Kraftsprüngen vorsieht.

US 3,977,241 beschreibt eine transportable Aktuatorvorrichtung zur Betätigung von Fußpedalen, die über einen Hydraulikzylinder betrieben wird. Die im Betrieb an der Aktuatorvorrichtung auftretenden Rückstellkräfte werden dabei über ein Gestänge auf eine Messdose übetragen und von dieser ermittelt.

US 2004/0255688 A1 offenbart eine Aktuatorvorrichtung zur Beaufschlagung eines Fußpedals, deren Kontaktfläche durch eine Rolle oder eine mit dem Fußpedal fest verbundene Verbindungsklammer gebildet ist. Die Rolle und die Klammer sind dabei jeweils unter Zwischenlage einer Kraftmessdose an einem Roboterarm gehalten. Zur Übertragung der zu ermittelnden Druckkraft auf die Kraftmessdose dient dabei eine Stange, die mit einem Gelenk verbunden ist, an dem die Rolle oder die Verbindungsklammer verdrehbar beziehungsweise verschwenkbar gehalten ist.

Nachteilig an der bekannten Aktuatorvorrichtung ist, dass deren Einbau und Ausrichtung in dem betreffenden Fahrzeug relativ aufwändig ist, da insbesondere das Bremspedalkontaktkissen und die Stößel der Mikroschalter sehr genau gegenüber dem Bremspedal und dem Fußraumboden des Fahrzeugs positioniert werden müssen, um einen störungsfreien Betrieb sicherstellen zu können. Zudem kann es auch bei exakter Voreinstellung insbesondere aufgrund von im Betrieb auftretenden Vibrationen zu Fehlfunktionen kommen, die beispielsweise durch veränderliche Positionen des Bremskraftaufnehmers gegenüber dem Pedal hervorgerufen werden.

Die Aufgabe der Erfindung ist es, bei einer gattungsgemäßen Aktuatorvorrichtung die genannten Nachteile zu vermeiden und einen einfachen Einbau sowie einen störungsfreien Betrieb zu gewährleisten.

Diese Aufgabe wird durch eine Aktuatorvorrichtung mit den Merkmalen des Anspruchs 1 gelöst. Dabei ist die Kontaktfläche durch eine Beaufschlagungsplatte gebildet und der Kraftsensor ist mit einer von der Kontaktfläche abgewandten Rückseite der Beaufschlagungsplatte bewegungsfest verbunden. Hierbei kann mit dem Begriff Beaufschlagungsplatte jegliches Element bezeichnet sein, das kontaktflächenseitig eine im Wesentlichen ebene Flächenerstreckung aufweist, die insbesondere wenigstens der Breite eines handelsüblichen Fußpedals entspricht. Hierdurch greift der Kraftsensor die durch das Betätigungselement erzeugte Druckkraft nicht an der Kontaktfläche der Beaufschlagungsplatte sondern an deren Rückseite ab. Bei entsprechend steifer Ausführung der Beaufschlagungsplatte, wie beispielsweise bei Ausführung als Metallplatte, erreicht man hierdurch einerseits, dass der an der Rückseite abgegriffene Messwert im Wesentlichen identisch mit der an der Kontaktfläche erzeugten Druckkraft ist, wobei dieser Messwert andererseits im Wesentlichen unabhängig davon ist, an weicher Stelle der Kontaktfläche der Beaufschlagungskraft im Betrieb tatsächlich erzeugt wird. Hierdurch können Einflüsse von beispielsweise vibrationsbedingten Positionsänderungen des Betätigungselementes gegenüber dem Pedal auf die Messwerte des Kraftsensors vernachlässigt werden. Zudem ist es bei dieser Aktuatorvorrichtung ausreichend das Betätigungselement derart am betreffenden Pedal anzuordnen, dass lediglich eine sichere Beaufschlagung des Pedals gewährleistet ist. Hierüber hinausgehende Anforderungen bei der Positionierung der Betätigungsvorrichtung sind dagegen nicht erforderlich, was den Einbau der Aktuatorvorrichtung erheblich vereinfacht.

Dabei weist der Kraftsensor einen Dehnungssensor an einem elastischen Verformungselement auf, das zwischen der Beaufschlagungsplatte und dem Stellantrieb angeordnet ist. Hierdurch ist eine besonders genaue Ermittlung einer an der Beaufschlagungsplatte im Betrieb auftretenden Druckkraftbeanspruchung durch Erfassung einer daraus resultierenden Längenänderung des Verformungselementes, wie einer Stauchung oder Dehnung, möglich.

Zudem ist dabei das Verformungselement durch einen Biegebalken gebildet. Der Biegebalken kann dabei durch jedes bekannte geeignete elastische Material gebildet sein, wie beispielsweise aus einem Metall, wie insbesondere Aluminium oder Stahl, oder aus einem Kunststoff, wie insbesondere einem kohlefaserverstärkten Kunststoff. Ein solcher Biegebalken ermöglicht dabei einerseits die problemlose Übertragung auch relativ großer Druckkräfte. Andererseits kann durch dessen form- beziehungsweise materialbedingte Elastizität für die im Betrieb zu erwartenden Lastfälle eine stabile Federkonstante eingestellt werden.

Besonders günstig ist es dabei, wenn der Biegebalken ein S-förmiges Profil aufweist. Hierdurch kann auch bei größerer Druckbeaufschlagung eine gewisse Parallelität eines antriebsseitigen Abschnittes und eines betätigungselementenseitigen Abschnittes des Verformungselementes sichergestellt werden.

Vorteilhafterweise ist der Dehnungssensor durch einen Dehnungsmessstreifen gebildet. Hierdurch sind am Betätigungselement auch sehr geringfügige Druckspannungen detektierbar, wie sie beispielsweise beim bloßen Anlegen des Betätigungselementes an dem betreffenden Fußpedal auftreten. Andererseits können mit einem solchen Dehnungsmessstreifen auch sprunghaft ansteigende Druckbelastungen problemlos detektiert werden, wie sie beispielsweise beim Erreichen einer Endstellung des betreffenden Fußpedals auftreten. Somit kann durch Verwendung des Dehnungsmessstreifens als Dehnungssensor auf sonstige Sensoren beziehungsweise Detektionsmittel, wie beispielsweise Mikroschaltervorrichtungen zum Erkennen der oben genannten Positionen, verzichtet werden.

Zudem ist es günstig, wenn sich der Dehnungsmessstreifen hierbei über den S-förmigen Profilbereich des Verformungselementes erstreckt, wodurch auch sehr kleine Kraft- beziehungsweise Druckeinwirkungen durch den Dehnungsmessstreifen ermittelt werden können.

Vorteilhafterweise ist der Kraftsensor zur Übermittlung von Signalen mit einer Auswertungseinrichtung verbunden. Diese ermöglicht eine Weiterbearbeitung der vom Kraftsensor ermittelten Messwerte, beispielsweise um diese dem Benutzer anzuzeigen oder um sie zur Steuerung des Stellantriebes zu verwenden.

Ferner ist es günstig, wenn der Stellantrieb von einer Elektronik steuerbar ist, mittels der ein Betätigungsprofil speicherbar und ausführbar ist. Hierdurch ist es möglich, bestimmte Testabläufe für einen bestimmten Typ von Fußpedalen vorab festzulegen und programmtechnisch zu speichern. Diese Tests können dann mittels der Aktuatorvorrichtung wiederkehrend an entsprechenden Fußpedalen durchgeführt werden, wodurch man vergleichbare Testergebnisse erhält.

In einer weiteren vorteilhaften Ausführungsform ist die Elektronik zur Bildung eines Regelkreises mit der Auswertungseinrichtung verbunden. Hierdurch ist eine geregelte und somit besonders exakte vorbestimmte Beaufschlagung des betreffenden Fußpedals über die Aktuatorvorrichtung möglich.

In den Figuren ist eine beispielhafte Ausführungsform der Erfindung dargestellt. Es zeigen:
- Figur 1: eine Ansicht einer erfindungsgemäßen Aktuatorvorrichtung im eingebauten Zustand,
- Figur 2: eine Seitenansicht der Aktuatorvorrichtung nach Fig 1 und
- Figur 3: eine perspektivische Ansicht eines pedalseitigen Endes eines Betätigungselementes der Aktuatorvorrichtung nach Fig. 1.

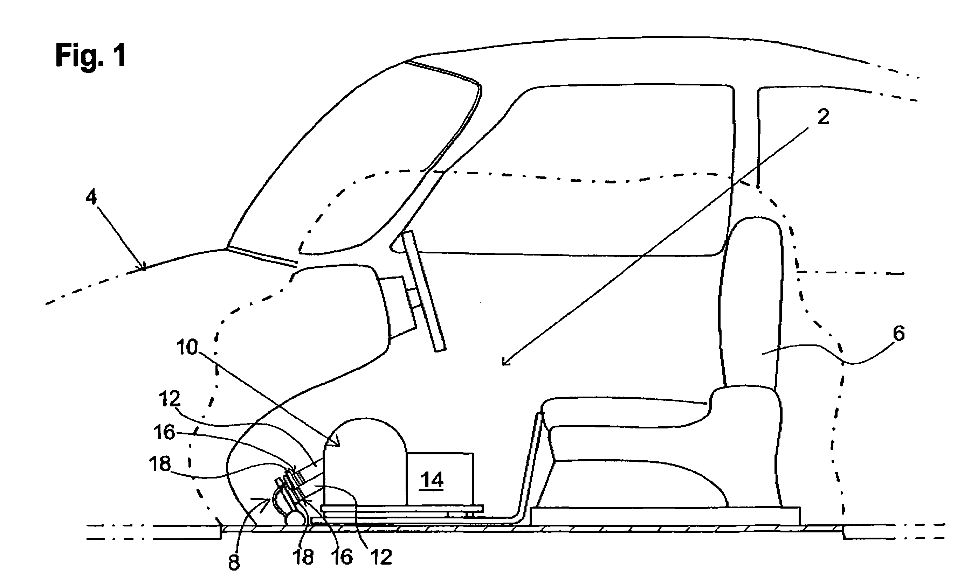

Fig. 1 zeigt den Fußraum 2 eines Kraftfahrzeuges 4 zwischen einem Fahrersitz 6 und Fußpedalen 8. Zur Beaufschlagung dieser Fußpedale 8 im Rahmen eines Dauertests ist in den Fußraum 2 eine Aktuatorvorrichtung 10 eingesetzt. Diese weist beispielhaft zwei Betätigungselemente 12 auf, die mittels eines Stellantriebes 14 hin- und her bewegbar sind, um die Fußpedale 8 wiederkehrend mit einer Druckkraft zu beaufschlagen.

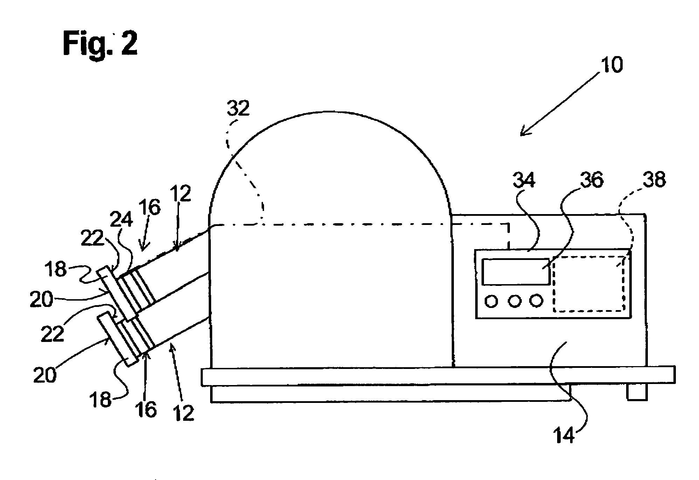

Um die beim Beaufschlagen der Fußpedale 8 von der Aktuatorvorrichtung 10 erzeugten Beaufschlagungskräfte genau erfassen zu können, weisen die Betätigungselemente 12 jeweils einen Kraftsensor 16 auf, wie insbesondere aus Fig. 2 zu entnehmen ist. Dieser Kraftsensor 16 ist an einer Beaufschlagungsplatte 18 des Betätigungselementes 12 vorgesehen, die eine Kontaktfläche 20 zum Anlegen an dem zu beaufschlagenden Fußpedal 8 aufweist. Die Kontaktfläche 20 ist dabei derart dimensioniert, dass bei den im Betrieb üblichen Vibrationen in jedem Fall eine sichere Anlage an dem betreffenden Fußpedal 8 gewährleistet ist aber andererseits eine Beaufschlagung eines benachbarten Fußpedals 8 ausgeschlossen werden kann. Der Kraftsensor 16 ist an einer von der Kontaktfläche 20 abgewandten Rückseite 22 der Beaufschlagungsplatte 18 vorgesehen.

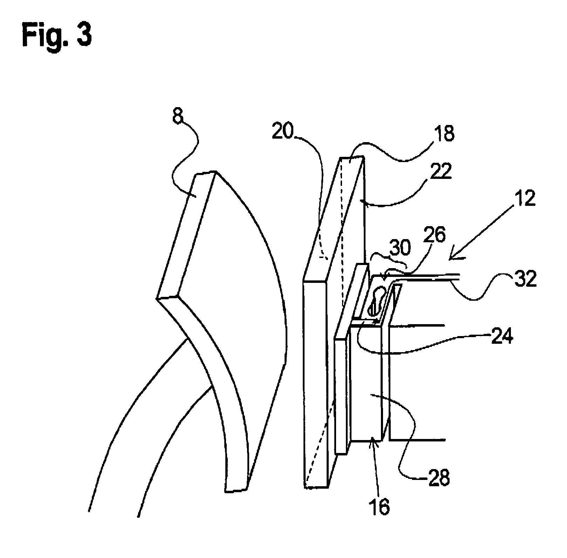

Wie insbesondere aus Fig. 3 zu entnehmen ist, weist der Kraftsensor 16 einen Dehnungssensor in Form eines Dehnungsmessstreifens 24 auf, der an einem elastischen Verformungselement 26 vorgesehen ist. Dieses ist beispielhaft durch einen Biegebalken 28 mit einem S-förmigen Profil 30 gebildet. Der Dehnungsmessstreifen 24 erstreckt sich dabei über einen Bereich des Verformungselementes 26 hinweg, der bei Aufbringung einer Beaufschlagungskraft vom Betätigungselement 12 auf das Fußpedal 8 verformt wird. Diese Verformung wird von dem Dehnungsmessstreifen 24 in elektrische Signale umgewandelt, die beispielsweise über ein Kabel 32 weiter gegeben werden können.

Wie aus Fig. 2 zu entnehmen ist, ist der Kraftsensor 16 über das Kabel 32 oder auch kabellos mit einer Auswertungseinrichtung 34 verbunden. Diese empfängt die vom Dehnungsmessstreifen 24 in Abhängigkeit der an der Beaufschlagungsplatte 18 erzeugten Beaufschlagungskräfte übermittelten Signale, rechnet diese in Abhängigkeit der Kenngrößen des Verformungselementes 26 in eine entsprechende aktuelle Beaufschlagungskraft um und zeigt diese beispielsweise an einem Display 36 an.

Darüber hinaus kann eine Elektronik 38 vorgesehen sein, über die der Stellantrieb 14 steuerbar ist und die insbesondere einen Speicher zum abspeichern verschiedender Betätigungsprofile für den Stellantrieb 14 umfasst. Hierdurch können verschiedene vorbestimmte Testverläufe datenmäßig gespeichert und bei Bedarf abgerufen werden, um den Stellantrieb 14 derart anzusteuern, dass das Betätigungselement 12 das betreffende Fußpedal 8 mit den dem jeweiligen Betätigungsprofil entsprechenden Beaufschlagungskräften beaufschlagt.

Ferner ist es möglich diese Elektronik 38 mit der Auswertungseinrichtung 32 zu verbinden, um im Betrieb einen von der Elektronik 38 vorgegebenen Sollwert der Beaufschlagungskraft mit einem tatsächlich an der Beaufschlagungsplatte 18 erzeugten Istwert der Beaufschlagungskraft kontinuierlich abgleichen zu können. Auf diese Weise bilden die Auswertungseinrichtung 32 und die Elektronik 34 zusammen mit dem Kraftsensor 16 einen Regelkreis, der eine direkte Regelung der am Fußpedal 8 erzeugten Beaufschlagungskräfte gewährleistet.

## Patentansprüche

1. Aktuatorvorrichtung (10) zur Betätigung wenigstens eines Fußpedals (8) eines Kraftfahrzeuges (4)
mit wenigstens einem Betätigungselement (12), das zur Beaufschlagung des Fußpedals (8) mittels eines Stellantriebes (14) antreibbar ist, und
mit einem Kraftsensor (16), mittels dem eine an einer Kontaktfläche (20) des Betätigungselementes (12) erzeugbare Beaufschlagungskraft detektierbar ist,
**dadurch gekennzeichnet, dass** die Kontaktfläche (20) durch eine Beaufschlagungsplatte (18) gebildet ist und der Kraftsensor (16) mit einer von der Kontaktfläche (20) abgewandten Rückseite (22) der Beaufschlagungsplatte (18) bewegungsfest verbunden ist und
der Kraftsensor (16) einen Dehnungssensor an einem durch einen Biegebalken (28) gebildeten elastischen Verformungselement (26) aufweist, das zwischen der Beaufschlagungsplatte (18) und dem Stellantrieb (14) angeordnet ist.

2. Aktuatorvorrichtung nach Anspruch 1, **dadurch gekennzeichnet, dass** der Biegebalken (28) ein S-förmiges Profil (30) aufweist.

3. Aktuatorvorrichtung nach Anspruch 1 oder 2, **dadurch gekennzeichnet, dass** der Dehnungssensor durch einen Dehnungsmessstreifen (24) gebildet ist.

4. Aktuatorvorrichtung nach Anspruch 3, **dadurch gekennzeichnet, dass** sich der Dehnungsmessstreifen (24) über das S-förmige Profil (30) des Biegebalkens (28) erstreckt.

5. Aktuatorvorrichtung nach einem der Ansprüche 1 bis 4, **dadurch gekennzeichnet, dass** der Kraftsensor (16) zur Übermittlung von Signalen mit einer Auswertungseinrichtung (34) verbunden ist.

6. Aktuatorvorrichtung nach einem der Ansprüche 1 bis 5, **dadurch gekennzeichnet, dass** der Stellantrieb (14) von einer Elektronik (38) steuerbar ist, mittels der ein Betätigungsprofil speicherbar und ausführbar ist.

7. Aktuatorvorrichtung nach Anspruch 6, **dadurch gekennzeichnet, dass** die Elektronik (38) zur Bildung eines Regelkreises mit der Auswertungseinrichtung (34) verbunden ist.

## Claims

1. Actuator device (10) for the actuation of a foot pedal (8) of a motor vehicle (4)
with at least one operating component (12) which can be driven by means of an actuator (14) such as to impose pressure on the foot pedal (8), and
with a force sensor (16), by means of which a pressure force produced at a contact surface (20) of the operating component (12) can be detected,
**characterized in that** the contact surface (20) is formed by a pressure application plate (18) and the force sensor (16) is connected to a rear side (22) of the pressure application plate (18) facing away from the contact surface (20), and
the force sensor (16) comprises an extension sensor at an elastic deformation element (26) formed by a flexure bar (28), which is arranged between the pressure application plate (18) and the actuator (14).

2. Actuator device according to claim 1, **characterized in that** the flexure bar (28) exhibits an S-shaped profile (30).

3. Actuator device according to claim 1 or 2, **characterized in that** the extension sensor is formed by an extension measuring strip (24).

4. Actuator device according to claim 3, **characterized in that** the extension measuring strip (24) extends over the S-shaped profile (3) of the flexure bar (28).

5. Actuator device according to one of claims 1 to 4, **characterized in that** the force sensor (16) is connected to an evaluation device (34) for the transferring of signals.

6. Actuator device according to one of claims 1 to 5, **characterized in that** the actuator (14) can be controlled by an electronic element (38) by means of which an actuation profile can be stored and implemented.

7. Actuator device according to claim 6, **characterized in that** the electronic element (38) is connected to the evaluation device (34) in order to form a control circuit.

## Revendications

1. Dispositif actionneur (10) pour l'actionnement d'au moins une pédale (8) d'un véhicule automobile (4)
comprenant au moins un élément d'actionnement (12), qui peut être entraîné au moyen d'un servomoteur (14) pour solliciter la pédale (8), et
comprenant un capteur de force (16), au moyen duquel une force de sollicitation pouvant être générée sur une surface de contact (20) de l'élément d'actionnement (12) peut être détectée,
**caractérisé en ce que** la surface de contact (20) est formée par une plaque de sollicitation (18) et le capteur de force (16) est relié solidairement en mouvement avec une face arrière (22) opposée à la surface de contact (20) de la plaque de sollicitation (18) et
le capteur de force (16) présente un capteur d'allongement sur un élément déformable (26) élastique formé par une poutre de flexion (28), l'élément déformable étant agencé entre la plaque de sollicitation (18) et le servomoteur (14).

2. Dispositif actionneur (10) selon la revendication 1, **caractérisé en ce que** la poutre de flexion (28) présente un profil en forme de S (30).

3. Dispositif actionneur (10) selon la revendication 1 ou 2, **caractérisé en ce que** le capteur d'allongement est formé par une bande de mesure d'allongement (24).

4. Dispositif actionneur (10) selon la revendication 3, **caractérisé en ce que** la bande de mesure d'allongement (24) s'étend sur le profil en forme de S (30) de la poutre de flexion (28).

5. Dispositif actionneur (10) selon l'une des revendications 1 à 4, **caractérisé en ce que** le capteur de force (16) est relié à un appareil d'évaluation (34), pour la transmission de signaux.

6. Dispositif actionneur (10) selon l'une des revendications 1 à 5, **caractérisé en ce que** le servomoteur (14) peut être commandé par une électronique (38), au moyen de laquelle un profil d'actionnement peut être enregistré et exécuté.

7. Dispositif actionneur (10) selon la revendication 6, **caractérisé en ce que** l'électronique (38) est reliée à l'appareil d'évaluation (34) pour former une boucle d'asservissement.
